# EUROPÄISCHE PATENTSCHRIFT

(11) **EP 2 133 203 B1**
(45) Veröffentlichungstag und Bekanntmachung des Hinweises auf die Patenterteilung: **19.01.2011**
(21) Anmeldenummer: 09007272.9
(22) Anmeldetag: 30.05.2009
(51) Int. Cl.: B32B 27/18, B32B 27/36, G02B 5/02

(54) **Mehrschichtige optische Folienaufbauten mit verbesserten Eigenschaften und deren Verwendung**
Multi-layer optical film constructions with improved characteristics and use thereof
Montage de feuille optique multicouche doté de propriétés améliorées et son utilisation

(30) Priorität: 11.06.2008 EP 08010562
(43) Veröffentlichungstag der Anmeldung: 16.12.2009
(73) Patentinhaber: Bayer MaterialScience AG, 51368 Leverkusen (DE)
(72) Erfinder: Pudleiner, Heinz, Dr., 47800 Krefeld (DE); Meyer, Klaus, 41539 Dormagen (DE); Nickel, Joerg, 41539 Dormagen (DE); Braun, Hans, 21150 Rayong (TH)

(56) Entgegenhaltungen:
- WO-A-01/85869
- WO-A-02/085613
- DE-A1-102005 040 313
- US-A1- 2003 053 008

## Beschreibung

Die vorliegende Erfindung betrifft mehrschichtige optische Folienaufbauten mit verbesserten Eigenschaften und deren Verwendung in Flüssigkristall-Displays (LCD).

Mehrschichtige Folienverbundstoffe, insbesondere mehrschichtige optische Folien gewinnen aufgrund einer Vielzahl von kommerziellen Anwendungen in zunehmendem Maße an Bedeutung. Ein Anwendungsgebiet ist das der Flüssigkristall-Bildschirme. Diese enthalten im Wesentlichen zwei Komponenten die sogenannte Backlight-Unit, in der das Licht erzeugt und durch verschiedene optische Schichten modifiziert wird und das LCD (Liquid Crystal Display). Dieses enthält rote, grüne und blaue Farbfilter und Flüssigkristalle, die durch feine Stromimpulse abwechselnd aktiviert werden und das Licht passieren lassen.

Grundsätzlich weist eine Hinterleuchtungseinheit (Backlight-Unit [BLU]) mit Direkt-Hinterleuchtung (Direct Light System) eines LCDs den nachfolgend beschriebenen Aufbau auf. Sie besteht in der Regel aus einem Gehäuse, in dem je nach Größe der Backlight-Unit eine unterschiedliche Anzahl an Leuchtstoffröhren, sogenannte CCFL (CoId Cathode Fluorescent Lamp) angeordnet sind. Die Gehäuseinnenseite ist mit einer Licht reflektierenden Oberfläche ausgestattet. Auf diesem Beleuchtungssystem liegt eine Diffuserplatte auf, die eine Dicke von 1 bis 3 mm aufweisen kann, bevorzugt eine Dicke von 2 mm. Auf der Diffuserplatte befindet sich ein Satz von Kunststofffolien, die die Lichtausbeute optimieren. Die Diffuserfolie streut ebenso wie die Diffuserplatte das Licht gleichmäßig, so dass das Streifenmuster der Leuchtstoffröhren verwischt. So kann eine homogene Ausleuchtung erzielt werden. Danach folgt eine Prismenfolie (Brightness Enhancing Film [BEF]). Deren Oberfläche ist so strukturiert, dass aus verschiedenen Richtungen einfallendes Licht direkt nach vom in Richtung des LCD ausgerichtet wird. Auf der Prismenfolie liegt üblicherweise eine weitere optische Folie, der so genannte Dual Brightness Enhancing Film (DBEF) auf. Der DBEF lässt nur exakt linear polarisiertes Licht hindurch, dass von den Kristallen im LCD verwertet werden kann. Licht mit anderer Ausrichtung wird an der DBEF zur reflektierenden Oberfläche der Gehäuseinnenseite zurückgeworfen und dort erneut nach vom Richtung DBEF gespiegelt. Die DBEF erhöht auf diese Weise die Ausbeute korrekt polarisierten Lichts und damit die Effizienz der BLU. Die linear polarisierende Folie liegt direkt unter dem darüber befindlichen LC-Displays.

Lichtstreuende Kunststoffzusammensetzungen, die für Diffuserplatten und Diffuserfolien in Flachbildschirmen Verwendung finden können sind beispielsweise in der WO 2007/039130 A1 und der WO 2007/039131 A1 beschrieben.

Reflektierende Polarisatoren (DBEF) sind im Stand der Technik bekannt. Beispielsweise werden in der WO 1996/19347 multilagige optische Folien als reflektierende Polarisatoren beschrieben.

Hierin sowie in der US 5,783,283 und der WO 1997/32726 wird zudem beschrieben, dass insbesondere Verbundstoffe mit alternierenden Schichten aus Polyethylennaphthalat (PEN) und Polyethylenterephthalat (PET) ein höheres Streckverhältnis aufweisen können als monolithische Folien entweder aus PET oder PEN. Zusätzlich wird offenbart, dass durch den Einsatz eines semikristallinen Thermoplasten als eine Folienschicht auch in Abwesenheit eines zusätzlichen Gleitmittels der Oberflächenrauhigkeitsgrad, die Trübung und der Reibungskoeffizient steuerbar ist und eingestellt werden kann. Dadurch können die mechanischen Eigenschaften und die Verarbeitbarkeit der Folien verbessert werden.

Das Anwendungsgebiet stellt an die Verarbeitbarkeit und weiteren Eigenschaften der optischen Folien hohe Ansprüche. So kann es beim Aufeinanderlegen der Folien beim Zusammenbau einer Backlight Unit oder beim Transport zu unerwünschten Verkratzungen auf der Oberfläche des DBEF oder zur Beschädigung der Prismenfolie oder der Diffuserfolie kommen.

Da der DBEF in einem üblichen Folienaufbau einer BLU auf den Spitzen der Prismenfolie aufgelegt wird, kann durch den bei der Verkratzung entstehenden Abrieb die optische Leistungsfähigkeit der Prismen-Folien verringert werden, da sich der Abrieb in den Vertiefungen der rippenartigen Prismenstruktur sammelt. Zudem wird die Lichtlenkungsfunktion der PrismenFolie durch die Ausprägung der Spitzen maßgeblich beeinflusst. Durch das Reiben der DBEF-Folie auf der Prismen-Folie können die Spitzen abgerieben werden und so wiederum die Qualität und Leistungsfähigkeit der Prismen-Folie verringern.

Der Erfindung liegt daher die Aufgabe zu Grunde einen optischen Folienaufbau bereitzustellen, der die genannten Probleme beseitigt und verbesserte Eigenschaften aufweist.

Diese Aufgabe wird erfindungsgemäß durch einen Folienaufbau gemäß Anspruch 1 gelöst, der mindestens eine Prismenfolie und/oder eine Diffuserfolie sowie eine mehrschichtige optische Folie umfasst, wobei die mehrschichtige optische Folie mindestens eine zur Prismenfolie und/oder zur Diffuserfolie gerichtete Deckfolie mit einer Außenschicht aus einer Kunststoffzusammensetzung, enthaltend einen transparenten Thermoplasten und als Gleitmittel-Additiv quartäre Ammoniumsalze von Perfluoralkylsulfonsäuren, aufweist und die Außenschicht wenigtstens einen Gleitreibungskoeffizienten < 0,30 zur Prismenfolie und/oder Diffuserfolie gemessen nach der Norm ASTM D 1894-06, bei einer Rauhigkeit R3z > 5 µm (R3z nach ISO 4288) aufweist.

Ein solcher erfindungsgemäßer Folienaufbau weist eine besonders gute Herstellbarkeit und Verarbeitbarkeit, sowie eine hervorragende Widerstandsfähigkeit gegen Verkratzungen und Beschädigungen auf. Hierdurch kann die Anzahl an fehlerhaften Produkten deutlich reduziert und deren Haltbarkeit verlängert werden. Insbesondere kann die optische Leistungsfähigkeit und Qualität des Folienaufbaus verbessert werden.

In einer bevorzugten Ausführungsform weist die Prismenfolie eine zur Außenschicht der mehrschichtigen optischen Folie gerichtete Prismenstruktur auf und die Außenschicht der mehrschichtigen optischen Folie weist einen Gleitreibungskoeffizienten ≤ 0,25 parallel zur Prismenstruktur der Prismenfolie und einen Gleitreibungskoeffizienten ≤ 0,30 quer zur Prismenstruktur der Prismenfolie, jeweils gemessen nach der Norm ASTM D 1894-06, bei einer Rauhigkeit R3z > 5 µm (R3z nach ISO 4288) auf.

Es hat sich überraschend gezeigt, dass mit dieser Ausführungsform des erfindungsgemäßen Folienaufbaus dessen Eigenschaften nochmals verbessert werden konnten Ein solcher Folienaufbau, in dem bei der Einstellung des Gleitreibungskoeffizienten der mehrschichtigen optischen Folie die Orientierung der Prismenstruktur der Prismenfolie berücksichtigt wird, zeigt nochmals eine verbesserte Verarbeitbarkeit und Widerstandsfähigkeit gegen Verkratzungen oder Beschädigungen im Folienverbund. Vorteilhafterweise ist die Lichtlenkungsfunktion der Prismenfolie in einem erfindungsgemäßen Folienaufbau besonders gut und die Qualität und optische Leistungsfähigkeit bleibt durch den verminderten Abrieb deutlich länger erhalten, als bei Folienaufbauten des Stands der Technik.

Als Prismenfolie kann erfindungsgemäß jede Folie eingesetzt werden, die durch ihre strukturierte Oberfläche aus verschiedenen Richtungen einfallendes Licht in eine bestimmte Richtung ausrichten kann und als sogenannter Brightness Enhancing Film (BEF) in LCDs geeignet ist. Die Oberfläche der Prismenfolie weist dabei eine Struktur aus alternierenden Vertiefungen (Grooves) und Spitzen auf.

Die erfindungsgemäße mehrschichtige optische Folie umfasst bevorzugt als optischen Teil ein Multischichtextrudat, das beispielsweise entsprechend der Patentschrift US 5,783,28 oder der Offenlegungsschriften WO 97/32726 oder WO 96/19347 hergestellt sein kann. Bevorzugt kann der optische Teil eine Multischicht aus Naphthalindicarbonsäure- und Terephthalsäure-Polyester sein. Dieser optische Teil wird erfindungsgemäß auch als Basisfolie oder Basisschicht bezeichnet. Auf der Basisfolie wird erfindungsgemäß mindestens eine Thermoplast-Folie als Deckfolie auflaminiert. Bevorzugt wird erfindungsgemäß auf die Basisfolie beidseitig eine strukturierte Thermoplast-Folie als Deckfolie auflaminiert, so dass ein sandwichartiger Aufbau entsteht.
Die erfmdungsgemäßen mehrschichtigen optischen Folien können beispielsweise besonders vorteilhaft als reflektierende Polarisator-Folien (sogenannte Dual Brightness Enhancement Film [DBEF]) in Flüssigkristall-Displays (LCD) eingesetzt werden.

Die Thermoplast-Deckfolie kann erfindungsgemäß ein- oder mehrschichtig aufgebaut sein. Ist die Deckfolie einschichtig aufgebaut entspricht die Deckfolie erfindungsgemäß der Außenschicht. Ist die Deckfolie, beispielsweise durch Coextrusion, mehrschichtig aufgebaut, wird die äußerste zur Prismenfolie und/oder Diffuserfolie gerichtete Folienschicht als Außenschicht bezeichnet. Die zur Prismenfolie gerichtete Außenschicht weist dabei einen Gleitreibungskoeffizienten ≤ 0,25 parallel zur Prismenstruktur der Prismenfolie und einen Gleitreibungskoeffizienten ≤ 0,30 quer zur Prismenstruktur der Prismenfolie auf jeweils gemessen nach der Norm ASTM D 1894-06, bei einer Rauhigkeit R3z > 5 µm (R3z nach ISO 4288) auf.

Unter "quer zur Prismenstruktur" wird erfindungsgemäß die Orientierung senkrecht, dass heißt 90 ° zu den ausgebildeten Vertiefungen (Grooves) und Spitzen der prismatischen Rippen der Prismenfolie verstanden. Unter "parallel zur Prismenstruktur" wird erfindungsgemäß die Orientierung parallel zu den Vertiefungen und Spitzen der prismatischen Rippen verstanden.

In einer bevorzugten Ausführungsform kann die Außenschicht aus einer Kunststoffzusammensetzung enthaltend 96 bis 99,89 Gew.-% eines transparenten Thermoplasten und 0,001 bis 4,0 Gew.-% quartärer Ammoniumsalze von Perfluoralkylsulfonsäuren als Gleitmittel-Additiv bestehen, wobei sich die genannten Bestandteile jeweils zu 100 Gew.-% ergänzen. Die Perfluoralkylsulfonsäureammoniumsalze als Gleitmittel-Additiv werden vorzugsweise in Mengen von 0,01 bis 4 Gew.-%, bevorzugt von 0,05 bis 2 Gew.-%, ganz besonders bevorzugt von 0,1 bis 0,5 Gew.-% zugesetzt.

Als Kunststoffe für die Außenschicht der mehrschichtigen optischen Folie kommen alle transparenten Thermoplaste in Frage: Es können zum Beispiel Polyacrylate, Polymethacrylate, Cycloolefin-Copolymere (COC), Polysulfone (PSU), Polystyrole (PS), Poly-alpha-methylstyrole (MS), Polyester, wie z.B. Polyethylenterephthalat (PET), Polyethylenterephthalat-Copolymere (PETG) oder Polyethylennaphthalat (PEN), Polycarbonate, Polycarbonat/Polyester-Blends, (PC/PET), Polycarbonat/Polycyclohexylmethanol-cyclohexandicarboxylat (PCCD), Polycarbonat/ Polybutylenterephthalat (PBT) eingesetzt werden.

Bevorzugt werden Polycarbonate für die Herstellung der Außenschicht eingesetzt. Hierbei können alle bekannten Polycarbonate eingesetzt werden. Dies können beispielsweise Homopolycarbonate, Copolycarbonate und thermoplastische Polyestercarbonate sein.

Bevorzugt haben die Polycarbonate ein gewichtsgemitteltes Molekulargewicht M_{w} von 18.000 bis 40.000, vorzugsweise von 26.000 bis 36.000 und besonders bevorzugt von 28.000 bis 35.000, ermittelt durch Messung der relativen Lösungsviskosität in einem Ubbelohde Viskosimeter bei 25°C in Dichlormethan oder in Mischungen gleicher Gewichtsmengen Phenol/o-Dichlorbenzol geeicht durch Lichtstreuung.

Die Herstellung der Polycarbonate kann nach bekannten Methoden, beispielsweise nach dem Phasengrenzflächenverfahren oder dem Schmelzumesterungsverfahren, erfolgen.

Die Herstellung der Polycarbonate nach dem Phasengrenzflächenverfahren ist mannigfaltig in der Literatur beschrieben; beispielhaft sei auf H. Schnell, Chemistry and Physics of Polycarbonates, Polymer Reviews, Vol. 9, Interscience Publishers, New York 1964 S. 33 ff., auf Polymer Reviews, Vol. 10, "Condensation Polymers by Interfacial and Solution Methods", Paul W. Morgan, Interscience Publishers, New York 1965, Kap. Vm, S. 325, auf Dres. U. Grigo, K. Kircher und P. R- Müller "Polycarbonate" in Becker/Braun, Kunststoff-Handbuch, Band 3/1, Polycarbonate, Polyacetale, Polyester, Celluloseester, Carl Hanser Verlag München, Wien 1992, S. 118-145 sowie auf die Patentschrift EP 0 517 044 A verwiesen.

Daneben ist die Herstellung von Polycarbonaten auch aus Diarylcarbonaten und Diphenolen nach dem bekannten Polycarbonatverfahren in der Schmelze, dem so genannten Schmelzumesterungsverfahren, möglich, das z.B. in WO-A 01/05866 und WO-A 01/05867 beschrieben ist. Daneben werden Umesterungsverfahren (Acetatverfahren und Phenylesterverfahren) beispielsweise in den US-A 3,494,885; US 4,386,186; US 4,661,580; US 4,680,371 und US 4,680,372, sowie in der EP-A 26 120, EP-A 26 121, EP-A 26 684, EP-A 28 030, EP-A 39 845, EP-A 91 602, EP-A 97 970, EP-A 79 075, EP-A 14 68 87, EP-A 15 61 03, EP-A 23 49 13 und EP-A 24 03 01 sowie in der DE-A 14 95 626 beschrieben.

Geeignete Diphenole sind z.B. in den US-A -PS 2,999,835; 3,148,172; 2,991,273; 3,271,367; 4,982,014 und 2,999,846; in den deutschen Offenlegungsschriften 1 570 703, 2 063 050, 2 036 052, 2211 956 und 3 832 396, der französischen Patentschrift 1 561 518, in der Monographie "H. Schnell, Chemistry and Physics of Polycarbonates, Interscience Publishers, New York 1964, S. 28ff; S.102ff, und in "D.G. Legrand, J.T. Bendler, Handbook of Polycarbonate Science and Technology, Marcel Dekker New York 2000, S. 72ff." beschrieben

Es können erfindungsgemäß sowohl Homopolycarbonate als auch Copolycarbonate eingesetzt werden. Zur Herstellung Copolycarbonate können erfindungsgemäß als eine Komponente auch 1 bis 25 Gew.-%, vorzugsweise 2,5 bis 25 Gew.-% (bezogen auf die Gesamtmenge an einzusetzenden Diphenolen), Polydiorganosiloxane mit Hydroxy-aryloxy-Endgruppen eingesetzt werden. Diese sind beispielsweise aus der US-Patentschrift US 3,419,634 bekannt oder nach literaturbekannten Verfahren herstellbar. Die Herstellung PoIydiorganosiloxanhaltiger Copolycarbonate wird beispielsweise in der Offenlegungschrift DE 33 34 782 A beschrieben.

Ferner können Polyestercarbonate und Block-Copolyestercarbonate erfindungsgemäß als Thermoplast verwendet werden, besonders wie sie in der WO-A 2000/26275 beschrieben sind. Aromatische Dicarbonsäuredihalogenide zur Herstellung von aromatischen Polyestercarbonaten sind vorzugsweise die Disäuredichloride der Isopthalsäure, Terepthalsäure, Diphenylether-4,4'-dicarbonsäure und der Naphthalin-2,6-dicarbonsäure.

Die aromatischen Polyestercarbonate können sowohl linear als auch in bekannter Weise verzweigt sein, wie beispielsweise in der DE 29 40 024 A und DE 30 07 934 A beschrieben.

Erfindungsgemäß bevorzugt können als Gleitmittel-Additiv ein oder mehrere quartäre Ammoniumsalze einer Perfluoralkylsulfonsäure der Formel (I)

R-SO₃ NR'R"R"'R"" (I)

eingesetzt werden, in welcher
R perfluorierte cyclische oder lineare, verzweigte oder unverzweigte Kohlenstoffketten mit 1 bis 30 Kohlenstoffatomen, bevorzugt 4 bis 8 Kohlenstoffatomen, im Falle der cyclischen Reste bevorzugt solche mit 5 bis 7 Kohlenstoffatomen;
R' unsubstituierte oder durch Halogen, Hydroxy, Cycloalkyl oder Alkyl, insbesondere durch C₁ bis C₃-Alkyl bzw.C₅ bis C₇-Cycloalkyl, substituierte, cyclische oder lineare, verzweigte oder unverzweigte Kohlenstoffketten mit 1 bis 30 Kohlenstoffatomen, bevorzugt 3 bis 10 Kohlenstoffatomen, im Falle cyclischer Reste bevorzugt solche mit 5 bis 7 Kohlenstoffatomen, besonders bevorzugt Propyl, 1 -Butyl, 1-Pentyl, Hexyl, Isopropyl, Isobutyl, tert-Butyl, Neopentyl, 2-Pentyl, Iso-Pentyl, Iso-Hexyl, Cyclohexyl, Cyclohexylmethyl und Cyclopentyl;
R", R"' und R"" jeweils unabhängig voneinander unsubstituierte oder durch Halogen, Hydroxy, Cycloalkyl oder Alkyl, insbesondere durch C₁ bis C₃-Alkyl, bzw.C₅ bis C₇-Cycloalkyl, substituierte, cyclische oder lineare, verzweigte oder unverzweigte Kohlenstoffketten mit 1 bis 30 Kohlenstoffatomen, bevorzugt 1 bis 10 Kohlenstoffatomen, im Falle cyclischer Reste bevorzugt solche mit 5 bis 7 Kohlenstoffatomen, besonders bevorzugt Methyl, Ethyl, Propyl, 1-Butyl, 1-Pentyl, Hexyl, 1-Isopropyl, Isobutyl, tert-Butyl, Neopentyl, 2-Pentyl, Iso-Pentyl, Iso-Hexyl, Cyclohexyl, Cyclohexylmethyl und Cyclopentyl bedeuten.

Eine bevorzugte Auswahl stellen dabei die Ammoniumsalze dar in welchen
R perfluorierte lineare oder verzweigte Kohlenstoffketten mit 1 bis 30 Kohlenstoffatomen, bevorzugt 4 bis 8 Kohlenstoffatomen;
R' halogenierte oder nichthalogenierte lineare oder verzweigte Kohlenstoffketten mit 1 bis 30 Kohlenstoffatomen, bevorzugt 3 bis 10 Kohlenstoffatomen besonders bevorzugt sind Propyl, 1-Butyl, 1-Pentyl, Hexyl, Isopropyl, Isobutyl, tert-Butyl, Neopentyl, 2-Pentyl, Iso-Pentyl, Iso-Hexyl; R", R"' und R"" jeweils unabhängig voneinander halogenierte oder nicht halogenierte lineare oder verzweigte Kohlenstoffketten mit 1 bis 30 Kohlenstoffatomen, bevorzugt 1 bis 10 Kohlenstoffatomen, besonders bevorzugt Methyl, Ethyl, Propyl, 1 -Butyl, 1- Pentyl, Hexyl, Isopropyl, Isobutyl, tert-Butyl, Neopentyl, 2-Pentyl, Iso-Pentyl, IsoHexyl bedeuten.

Besonders bevorzugte quartäre Ammoniumsalze als Gleitmittel-Additive im Sinne der Erfindung sind:
- Perfluoroctansulfonsäuretetrapropylammoniumsalz,
- Perfluorbutansulfonsäuretetrapropylammoniumsalz,
- Perfluoroctansulfonsäuretetrabutylammoniumsalz,
- Perfluorbutansulfonsäuretetrabutylammoniumsalz,
- Perfluoroctansulfonsäuretetrapentylammoniumsalz,
- Perfluorbutansulfonsäuretetrapentylammoniumsalz,
- Perfluoroctansulfonsäuretetrahexylammoniumsalz,
- Perfluorbutansulfonsäuretetrahexylammoniumsalz,
- Perfluorbutansulfonsäuretrimethylneopentylammoniumsalz,
- Perfluoroctansulfonsäuredimethyldiisopropylammoniumsalz,
- Perfluoroctansulfonsäuretrimethylneopentylammoniumsalz,
- Periluorbutansulfonsäuredimethyldineopentylammoniumsalz,
- Perfluoroctansulfonsäuredimethyldineopentylammoniumsalz,
- N-Methyl-tripropylammoniumperfluorbutylsulfonat,
- N-Ethyl-tripropylammoniumperfluorbutylsulfonat,
- Tetrapropylammoniumperfluorbutylsulfonat,
- Dimethyldiisopropylammoniumperfluorbutylsulfonat,
- N-Methyl-tributylammoniumperfluoroctylsulfonat
- Cyclohexyldiethylmethylammoniumperfluoroctylsulfonat,
- Cyclohexyltrimethylammoniumperfluoroctylsulfonat.

Erfindungsgemäß können ein oder mehrere der vorstehend genannten quartären Ammoniumsalze, also auch Mischungen als Gleitmittel-Additiv eingesetzt werden

Dabei wird das/die erfindungsgemäße/n Gleitmittel-Additiv/e bevorzugt aus der Gruppe Perfluoroctansulfonsäuretetrapropylammoniumsalz,
Perfluoroctansulfonsäuretetrabutylammoniumsalz,
Perfluoroctansulfonsäuretetrapentylammoniumsalz,
Perfluoroctansulfonsäuretetrahexylammoniumsalz,
Perfluoroctansulfonsäuredimethyldiisopropylammoniumsalz und Cyclohexyltrimethylammoniumperfluoroctylsulfonat, sowie den entsprechenden Perfluorbutansulfonsäuresalzen ausgewählt.

In einer ganz besonders bevorzugten Ausführungsform der Erfindung wird als Gleitmittel-Additiv das Perfluorbutansulfonsäuredimethyldi-isopropylammoniumsalz verwendet.

Perfluoralkylsulfonsäureammoniumsalze sind bekannt oder können nach bekannten Methoden hergestellt werden. Herstellverfahren sind beispielsweise in der WO-A 01/85869, DE 1 966 931 A oder NL 7802 830 beschrieben.

Optional können erfindungsgemäß zusätzliche übliche Polymeradditive in den Kunststoffzusammensetzungen der Folien des erfindungsgemäßen Folienaufbaus enthalten sein. Beispielsweise können UV-Absorber, sowie übliche Verarbeitungshilfsmittel, insbesondere Entformungsmittel und Fließmittel sowie beispielsweise für Polycarbonate bekannte Stabilisatoren insbesondere Thermostabilisatoren, Antistatika und/oder optische Aufheller enthalten sein. In jeder Folie oder Schicht können dabei unterschiedliche Additive bzw. Konzentrationen von Additiven vorhanden sein.

Die Einarbeitung der Gleitmittel-Additive und/oder weiterer vorgenannter Additive kann durch bekannte Verfahren erfolgen. Diese kann zum Beispiel durch Vermischen von Polymergranulat (Polycarbonat) mit den Zusätzen bei Temperaturen von etwa 200 bis 350°C in Aggregaten wie Innenknetern, Einschneckenextrudem und Doppelwellenextrudern, beispielsweise durch Schmelzecompoundierung oder Schmelzeextrusion oder durch Vermischen der Lösungen des Polymers mit Lösungen der Additive in geeigneten organischen Lösungsmitteln wie CH₂CI₂, Halogenalkanen, Halogenaromaten, Chlorbenzol und Xylolen und anschließende Verdampfung der Lösungsmittel in bekannter Weise erfolgen.
Der Anteil der Additive in den Kunststoffzusammensetzungen kann in weiten Grenzen variiert werden und richtet sich nach den entsprechenden gewünschten Eigenschaften der Folien.

In einer weiteren bevorzugten Ausführungsform der Erfindung kann die Kunststoffzusammensetzung der Außenschicht 0.01 bis 0.5 Gew.-% eines UV-Absorbers bezogen auf die Gesamtmenge der Kunststoffzusammensetzung ausgewählt aus den Klassen der Benzotriazol-Derivate, dimere Benzotriazol-Derivate, Triazin-Derivate, dimere Triazin-Derivate, Diaryl-cyanoacrylate enthalten.

Als Stabilisatoren können erfindungsgemäß beispielsweise Phosphine, Phosphite oder Si enthaltende Stabilisatoren und weitere in der EP-A 0 500 496 beschriebene Verbindungen eingesetzt werden. Beispielhaft seien Triphenylphosphite, Diphenylalkylphosphite, Phenyldialkylphosphite, Tris-(nonylphenyl)phosphit, Tetrakis-(2,4-di-tert-butylphenyl)-4,4'-biphenylen-diphosphonit, . Bis(2,4-dicumylphenyl)pentaerythritoldiphosphit und Triarylphosphit genannt. Besonders bevorzugt können Triphenylphosphin und Tris-(2,4-di-tert-butylphenyl)phosphit als Stabilisatoren verwendet werden.

In einer weiteren bevorzugten Ausführungsform kann die Deckfolie der mehrschichtigen optischen Folie neben der Außenschicht mindestens eine Coextrusionsschicht enthalten. Mit anderen Worten kann die Deckfolie ein- oder mehrschichtig aufgebaut sein. Die Kunststoffzusammensetzung der Außenschicht und der Coextrusionsschicht kann gleich oder unterschiedlich zusammengesetzt sein. Die gegebenenfalls vorhandene Coextrusionsschicht kann nach einer erfindungsgemäßen Variante zusätzlich zum Gleitmittel-Additiv, UV-Absorber und/oder Entformungsmittel enthalten. Die Kunststoffzusammensetzung der Coextrusionsschicht kann alternativ auch frei von Gleitmittel-Additiv sein.

In einem bevorzugten Folienaufbau mit mindestens einer Coextrusionsschicht in der Deckfolie kann die Coextrusionsschicht vorzugsweise zwischen 10 und 100 µm, besonders bevorzugt zwischen 20 und 50 µm dick sein.

Die erfindungsgemäßen Folien können durch Extrusion hergestellt oder auch aus Lösungen in Form von Gießfolien gegossen werden.

Zur Extrusion kann ein Polycarbonat-Granulat einem Extruder zugeführt und im Plastifizierungssystem des Extruders aufgeschmolzen werden. Die Kunststoffschmelze kann dann durch eine Breitschlitzdüse gedrückt und dabei verformt werden. Im Walzenspalt eines Glättkalanders kann die Kunststoffmasse in die gewünschte endgültige Form gebracht und durch wechselseitige Kühlung auf Glättwalzen und der Umgebungsluft formfixiert werden. Polycarbonate mit hoher Schmelzviskosität können üblicherweise bei Schmelztemperaturen von 260 bis 320 °C verarbeitet werden. Entsprechend werden die Zylindertemperaturen des Plastifizierzylinders sowie Düsentemperaturen eingestellt.

Durch Einsatz von einem oder mehreren Seitenextrudern und geeigneten Schmelzeadaptern vor der Breitschlitzdüse lassen sich Polycarbonatschmelzen verschiedener Zusammensetzung übereinander legen und somit mehrschichtige Platten oder Folien erzeugen, wie beispielsweise in der EP-A 0 110 221 und EP-A 0 110 238 offenbart.

Die Dicke der gesamten mehrschichtigen optischen Folie im erfindungsgemäßen Folienaufbau kann vorzugsweise 50 µm bis 1000 µm, besonders bevorzugt 70 µm bis 800 µm und ganz besonders bevorzugt 100 µm bis 700 µm betragen.

Die Dicke der Außenschicht , also der Prismenfolie und oder Diffuserfolie zugewandten Schicht, welche das Gleitmittel-Additiv enthält, ist vorzugsweise zwischen 1 µm und 150 µm, bevorzugt 5 µm bis 100 µm, besonders bevorzugt 10 µm bis 75 µm.

Die Dicke der Schicht oder der Schichten des optischen Teils der mehrschichtigen optischen Folie, die bevorzugt kein Gleitmittel-Additiv enthält, beträgt bevorzugt zwischen 20 µm und 600 µm.

Die mehrschichtige optische Folie kann aus den Thermoplast-Folien der Außenschicht durch Lamination oder Extrusionslamination mit einer optischen Basisfolie beispielsweise mit einem Multischicht-Extrudat gemäß der Patentschrift US 5,783,28 oder der Offenlegungsschriften WO 97/32726 und WO 96/19347, bevorzugt mit einer Multischicht aus Naphthalindicarbonsäure- und Terephthalsäure-Polyester hergestellt werden.

Diese mehrschichtigen optischen Folien können dann nachfolgend, auf eine Prismenfolie, beispielsweise einem bekannten handelsüblichen BEF zum erfindungsgemäßen Folienaufbau aufgelegt werden. Solche erfindungsgemäßen Folienaufbauten weisen neben den guten optischen Eigenschaften eine besonders gute Qualität und optische Leistungsfähigkeit auf. Darüber hinaus zeichnen sich die Folien durch, gute Verarbeitbarkeit und eine hervorragende Widerstandsfähigkeit gegen Verkratzungen und Beschädigungen auf.

Gegenstand der vorliegenden Erfindung ist zudem eine Backlight Unit für einen Flüssigkristall-Bildschirm, die die vorstehend beschriebenen erfindungsgemäßen mehrschichtigen optischen Folien und Folienaufbauten enthält.

Weiterer Gegenstand der Erfindung ist die Verwendung der erfindungsgemäßen mehrschichtigen optischen Folien und Folienaufbauten Flüssigkristall-Bildschirmen.

Die folgenden Beispiele sollen die Erfindung verdeutlichen ohne sie jedoch zu beschränken.

### Beispiel 1

### Herstellung eines Polycarbonat-Gleitmittel-Additiv Masterbatches

Die Herstellung des Gleitmittel-Additiv-Compound (Granulat) erfolgte mit einem herkömmlichen Zweischnecken-Compoundierextruder bei für Polycarbonate üblichen Verarbeitungstemperaturen von 250 bis 330°C.

Es wurde ein Master-Batch mit folgender Zusammensetzung hergestellt:
- Polycarbonat Makrolon 2600 000000 der Fa. Bayer MaterialScience AG mit einem Anteil von 98 Gew.-%
- Di-isopropyl-dimethylammonium-perfluorbutansulfonat als farbloses Pulver mit einem Anteil von 2 Gew-%.

### Beispiel 2

### Herstellung einer Außenschicht Folie

### Folien-Extrusion:

Die verwendete Anlage für die Herstellung der Folien besteht aus
- einem Hauptextruder mit einer Schnecke von 105 mm Durchmesser (D) und einer Länge von 41 x D; die Schnecke weist eine Entgasungszone auf;
- einer Extrusions-Breitschlitzdüse mit 1500 mm Breite;
- einem Dreiwalzen-Glättkalander mit horizontaler Walzenanordnung, wobei die dritte Walze um +/- 45° gegenüber der Horizontalen schwenkbar ist;
- einer Rollenbahn;
- einer Einrichtung zum beidseitigen Aufbringen von Schutzfolie;
- einer Abzugseinrichtung;
- Aufwickelstation.

Es wurden folgende Verfahrensparameter gewählt:

**Tabelle 1:**

| | |
|---|---|
| Temperatur des Hauptextruders | 275 °C +/- 5°C |
| Temperatur des Coextruders | 260 °C +/-5°C |
| Temperatur des Umlenkkopfes | 285 °C +/-5°C |
| Temperatur der Düse | 300 °C +/-5°C |
| Drehzahl des Hauptextruders | 45 min⁻¹ |
| Drehzahl des Coextruders | 12 min⁻¹ |
| Temperatur der Gummiwalze 1 | 24 °C |
| Temperatur der Walze 2 | 72 °C |
| Temperatur der Walze 3 | 131 °C |
| Abzugsgeschwindigkeit | 21,5 m/min |

Es wurde ein Compound (Granulat) folgender Zusammensetzung abgemischt:
- Polycarbonat Makrolon 3108 550115 der Fa. Bayer MaterialScience AG mit einem Anteil von 80,0 Gew.-%
- Gleitmittel-Additiv -Masterbatch gemäß Beispiel 1 mit einem Anteil von 20,0 Gew.-%.

Das Polymergranulat wurde dem Fülltrichter des Extruders zugeführt. Im Plastifiziersystem Zylinder/Schnecke des Extruders erfolgte das Aufschmelzen und Fördern des Materials. Die Materialschmelze wurde dem Glättkalander zugeführt, dessen Walzen die in der Tabelle 1 genannte Temperatur aufwiesen. Auf dem Glättkalander (bestehend aus drei Walzen) erfolgte die endgültige Formgebung und Abkühlung der Folie. Zur Strukturierung der Folienoberfläche wurden dabei eine strukturierte Gummi-Walze und eine Stahlwalze eingesetzt. Die für die Strukturierung der Folienoberfläche verwendete Gummi-Walze ist in US 4,368,240 der Fa. Nauta Roll Corporation offenbart. Durch die Strukturierung wird eine bestimmte Rauhigkeit der Folienoberfläche erzeugt. Anschließend wurde die Folie durch einen Abzug transportiert. Danach kann eine Schutzfolie aus PE beidseitig aufgebracht werden und eine Aufwicklung der Folie erfolgen. Die Schutzfolie kann nachfolgend auf einer Seite entfernt werden und auf die Basisfolie auflaminiert werden.

Es wurden eine strukturierte Stahl und eine strukturierte Gummiwalze im Glättwerk eingesetzt und eine Polycarbonatfolie in 130 µm Dicke mit beidseitig strukturierter Oberfläche erzeugt.

### Beispiel 3

### Herstellung einer Außenschicht-Folie

Es wurde ein Compound folgender Zusammensetzung abgemischt:
- Polycarbonat Makrolon 3108 550115 der Fa. Bayer MaterialScience AG mit einem Anteil von 80,0 Gew.-%
- Gleitmittel-Additiv -Masterbatch gemäß Beispiel 1 mit einem Anteil von 20,0 Gew.-%.
Es wurde eine strukturierte Stahl- und eine Gummi-Walze im Glättwerk eingesetzt und eine Folie in 130 µm Dicke mit beidseitig strukturierter Oberfläche hergestellt.

Für die Strukturierung wurde also Stahl- und Gummi-Prägewalzen eingesetzt, so dass bei den erfindungsgemäßen Folien die erste Seite von der Gummi-Walze und die zweite Seite von der Stahl-Walze geprägt wurde und diese somit unterschiedliche Rauhigkeiten aufweisen (siehe Tabelle 2.

### Beispiel 4 (nicht erfindungsgemäß):

Als Vergleichsprobe zu Beispiel 2 und 3 wurde ein Compound folgender Zusammensetzung ohne Gleitmittel-Additiv abgemischt:
- Polycarbonat Makrolon 3108 550115 Bayer MaterialScience AG mit einem Anteil von 100,0 Gew.-%
Es wurde eine strukturierte Stahl- und eine Gummi-Walze im Glättwerk eingesetzt und eine Folie in 130 µm Dicke mit beidseitig strukturierter Oberfläche hergestellt.

### Beispiel 5

### Herstellung einer mehrschichtigen optischen Folie

Auf eine Multischicht-Basisfolie aus Naphthalindicarbonsäure und Terephthalsäure-Polyester wurde beidseitig eine erfindungsgemäße Außenschicht-Folie aus Beispiel 2 auflaminiert.

### Eingesetzte Prismenfolien:

### Prismenfolie 1:

BEF III T 90/50: Handelsüblicher Brightness Enhancement Film aus der Produktreihe Vikuiti® der Firma 3M

### Prismenfolie 2:

BEF II T 90/50: Handelsüblicher Brightness Enhancement Film aus der Produktreihe Vikuiti® der Firma 3M

Als weitere Vergleichsproben für die erfindungsgemäßen Außenschicht-Folien und mehrschichtigen optischen Folien wurden folgende Folien des Stands der Technik eingesetzt:

### Vergleichsprobe 1

DBEF D 400: Handelsüblicher Dual Brightness Enhancement Film aus der Produktreihe Vikuiti ® der Firma 3M. Die Folie besteht aus einer auf der Außenseite strukturierten Polycarbonat-Folie und einer Multilagenschicht in der Mitte. In einem üblichen Foliensatz einer Backlight Unit liegt der DBEF D400 Folie auf den oben genannten Prismenfolien (BEF) 1 oder 2 auf.

### Vergleichsprobe 2

Makrofol DE 1-4, 125 µm: Handelsübliche Polycarbonat-Folie der Bayer MaterialScience AG; 1-er Seite glatt; 4-er Seite fein strukturiert.

### Vergleichsprobe 3

Makrofol DE 6-2, 125 µm: Handelsübliche Polycarbonat-Folie der Bayer MaterialScience AG; 6-er Seite (zweite Seite Stahlwalze) matt strukturiert; 2-er Seite (erste Seite Gummi-Walze) fein strukturiert.

**Tabelle 2 Rauhigkeitsmessungen**

| Die Rauhigkeit wurde gemäß der Norm ISO 4288 bestimmt. | | | |
|---|---|---|---|
| Gemessene Folie | | R3z Erste Seite | R3z Zweite Seite |
| Vergleichsprobe 1 (DBEF) | Nicht erfindungsgemäß | 9,51 | 9,51 |
| Vergleichsprobe 2 | Nicht erfindungsgemäß | < 1 | 6,6 |
| | | R3z Erste Seite (Gummi-Walze) | R3z Zweite Seite (Stahl-Walze) |
| Vergleichsprobe 3 | Nicht erfmdungsgemäß | 7,7 | 15,3 |
| Beispiel 2 | erfindungsgemäß | 7,9 | 8,6 |
| Beispiel 3 | erfindungsgemäß | 6,7 | 8,7 |
| Beispiel 4 | Nicht erfindungsgemäß | 6,2 | 9,5 |
| Beispiel 5 | erfindungsgemäß | 7,9 | 8,6 |

### Bestimmung der Reibungskoeffizienten:

Der Gleitreibungskoeffizient wurde gemäß der Norm ASTM D 1894-06 bestimmt. Es wurden jeweils die Oberflächen der ersten Seite (siehe vorstehende Tabelle 2) der Folien verwendet.

### Bedingungen:

Messtemperatur: 23 °C
Reibklotz 50 mm
Masse des Reibklotzes 202,2 g
Probenkörper Breite: 60 mm
Länge: 200 mm

| Folie und Seite (siehe Tabelle 2) | Prismenfolie 1 (Reibpartner) | Gleitreibungszahl |
|---|---|---|
| Vergleichsprobe 1 (DBEF) | BEF III T 90/50 | 0,30 |
| Erste Seite | Parallel zur Prismenstruktur | |
| Beispiel 3 | BEF III T 90/50 | 0,25 |
| erste Seite | Parallel zur Prismenstruktur | |
| Beispiel 4 | BEF III T 90/50 | 0,28 |
| erste Seite | Parallel zur Prismenstruktur | |
| Beispiel 5 | BEF III T 90/50 | 0,24 |
| erste Seite | Parallel zur Prismenstruktur | |
| | | |

| Folie und Seite | Prismenfolie 1 (Reibpartner) | Gleitreibungszahl |
|---|---|---|
| Vergleichsprobe 1 (DBEF) | BEF III T 90/50 | 0,32 |
| erste Seite | quer zur Prismenstruktur | |
| Beispiel 3 | BEF III T 90/50 | 0,30 |
| erste Seite | quer zur Prismenstruktur | |
| Beispiel 4 | BEF III T 90/50 | 0,33 |
| erste Seite | quer zur Prismenstruktur | |
| Beispiel 5 | BEF III T 90/50 | 0,29 |
| erste Seite | quer zur Prismenstruktur | |
| | | |

| Folie und Seite (siehe Tabelle 2) | Prismenfolie 2 (Reibpartner) | Gleitreibungszahl |
|---|---|---|
| Vergleichsprobe 2 (DBEF) | BEF II T 90/50 | 0,31 |
| erste Seite | Parallel zur Prismenstruktur | |
| Vergleichsprobe 3 | BEF II T 90/50 | 0,34 |
| erste Seite | Parallel zur Prismenstruktur | |
| Beispiel 2 | BEF II T 90/50 | 0,25 |
| erste Seite | Parallel zur Prismenstruktur | |
| | | |

| Folie und Seite | Prismenfolie 2 (Reibpartner) | Gleitreibungszahl |
|---|---|---|
| Vergleichsprobe 2 (DBEF) | BEF II T 90/50 | 0,34 |
| erste Seite | Quer zur Prismenstruktur | |
| Vergleichsprobe 3 | BEF II T 90/50 | 0,38 |
| erste Seite | Quer zur Prismenstruktur | |
| Beispiel 2 | BEF II T 90/50 | 0,30 |
| erste Seite | Quer zur Prismenstruktur | |

Zusammenfassend werden erfindungsgemäß optische Folienaufbauten bereitgestellt, die verbesserte Eigenschaften aufweisen und besonders geeignet für die Verwendung in Flüssigkristall-Flachbildschirmen sind.

## Patentansprüche

1. Folienaufbau umfassend mindestens eine Prismenfolie und/oder eine Diffuserfolie sowie eine mehrschichtige optische Folie wobei die mehrschichtige optische Folie mindestens eine Deckfolie mit einer zur Prismenfolie und/oder Diffuserfolie gerichteten Außenschicht aus einer Kunststoffzusammensetzung, enthaltend einen transparenten Thermoplasten und als Gleitmittel-Additiv mindestens ein quartäres Ammoniumsalz einer Perfluoralkylsulfonsäure aufweist, **dadurch gekennzeichnet, dass** die Außenschicht wenigstens einen Gleitreibungskoeffizienten < 0,30 zur Prismenfolie und/oder Diffuserfolie gemessen nach der Norm ASTM D 1894-06, bei einer Rauhigkeit R3z > 5 µm gemessen nach der Norm ISO 4288 aufweist.

2. Folienaufbau nach Anspruch 1 **dadurch gekennzeichnet, dass** die Prismenfolie eine zur mehrschichtigen optischen Folie gerichtete Prismenstruktur aufweist und die Außenschicht der mehrschichtigen optischen Folie einen Gleitreibungskoeffizienten ≤ 0,25 parallel zur Prismenstruktur der Prismenfolie und einen Gleitreibungskoeffizienten ≤ 0,30 quer zur Prismenstruktur der Prismenfolie, jeweils gemessen nach der Norm ASTM D 1894-06, bei einer Rauhigkeit R3z > 5 µm (R3z nach ISO 4288) aufweist.

3. Folienaufbau nach Anspruch 1 oder 2, **dadurch gekennzeichnet, dass** die mehrschichtige optische Folie eine optische Basisfolie umfassend eine Multischicht aus Naphthalindicarbonsäure und/oder Terephthalsäure-Polyester aufweist.

4. Folienaufbau nach wenigstens einem der Ansprüche 1 bis 3, **dadurch gekennzeichnet, dass** die Kunststoffzusammensetzung der Außenschicht 96 bis 99,89 Gew.-% eines transparenten Thermoplasten und 0,001 bis 4,0 Gew.-% quartäre Ammoniumsalze von Perfluoralkylsulfonsäuren als Gleitmittel-Additiv enthält, wobei sich diese Bestandteile jeweils zu 100 Gew.-% ergänzen.

5. Folienaufbau nach wenigstens einem der Ansprüche 1 bis 4, **dadurch gekennzeichnet, dass** für die Kunststoffzusammensetzung der Außenschicht ein transparenter Thermoplast ausgewählt aus der Gruppe der Polyacrylate, Polymethacrylate, Cycloolefin-Copolymere, Polysulfone, Polystyrole, Poly-alpha-methyl-Styrole, Polyester, Polycarbonate, Polycarbonat/Polyester-Blends, Polycarbonat/Polycyclohexylmethanolcyclohexandicarboxylat (PCCD) und Polycarbonat/PBT eingesetzt wird.

6. Folienaufbau nach wenigstens einem der Ansprüche 1 bis 5, **dadurch gekennzeichnet, dass** als Gleitmittel-Additiv ein oder mehrere quartäre Ammoniumsalze einer Perfluoralkylsulfonsäure der Formel (I)
R-S0₃ NR'R"R"'R"" (I)
eingesetzt werden, in welcher
R perfluorierte cyclische oder lineare, verzweigte oder unverzweigte Kohlenstoffketten mit 1 bis 30 Kohlenstoffatomen;
R' unsubstituierte oder durch Halogen, Hydroxy, Cycloalkyl oder Alkyl substituierte, cyclische oder lineare, verzweigte oder unverzweigte Kohlenstoffketten mit 1 bis 30 Kohlenstoffatomen,
und
R", R"' und R"" jeweils unabhängig voneinander unsubstituierte oder durch Halogen, Hydroxy, Cycloalkyl oder Alkyl, substituierte, cyclische oder lineare, verzweigte oder unverzweigte Kohlenstoffketten mit 1 bis 30 Kohlenstoffatomen,
bedeuten.

7. Folienaufbau nach wenigstens einem der Ansprüche 1 bis 6, **dadurch gekennzeichnet, dass** das Gleitmittel-Additiv ein oder mehrere quartäre Ammoniumsalze ausgewählt aus der Gruppe
Perfluoroctansulfonsäuretetrapropylammoniumsalz,
Perfluorbutansulfonsäuretetrapropylammoniumsalz,
Perfluoroctansulfonsäuretetrabutylammoniumsalz,
Perfluorbutansulfonsäuretetrabutylammoniumsalz,
Perfluoroctansulfonsäuretetrapentylammoniumsalz,
Perfluorbutansulfonsäuretetrapentylammoniumsalz,
Perfluoroctansulfonsäuretetrahexylammoniumsalz,
Perfluorbutansulfonsäuretetrahexylammoniumsalz,
Perfluorbutansulfonsäuretrimethylneopentylammoniumsalz,
Perfluoroctansulfonsäuredimethyldiisopropylammoniumsalz,
Perfluoroctansulfonsäuretrimethylneopentylammoniumsalz,
Perfluorbutansulfonsäuredimethyldineopentylammoniumsalz,
Perfluoroctansulfonsäuredimethyldineopentylammoniumsalz,
N-Methyl-tripropylammoniumperfluorbutylsulfonat,
N-Ethyl-tripropylammoniumperfluorbutylsulfonat,
Tetrapropylammoniumperfluorbutylsulfonat,
Dimethyldiisopropylammoniumperfluorbutylsulfonat,
N-Methyl-tributylammoniumperfluoroctylsulfonat,
Cyclohexyldiethylmethylammoniumperfluoroctylsulfonat und
Cyclohexyltrimethylammoniumperfluoroctylsulfonat ist.

8. Folienaufbau nach wenigstens einem der Ansprüche 1 bis 7, **dadurch gekennzeichnet, dass** das Gleitmittel-Additiv Di-isopropyl-dimethylammoniumperfluorbutylsulfonat ist.

9. Folienaufbau nach wenigstens einem der Ansprüche 1 bis 8, **dadurch gekennzeichnet, dass** die mehrschichtige optischen Folie eine Dicke von 50 µm bis 1000 µm aufweist.

10. Folienaufbau nach wenigstens einem der Ansprüche 1 bis 9, **dadurch gekennzeichnet, dass** die Außenschicht der mehrschichtigen optischen Folie eine Dicke von 1 µm bis 150 µm aufweist.

11. Folienaufbau nach wenigstens einem der Ansprüche 1 bis 10, **dadurch gekennzeichnet, dass** die Deckfolie neben der Außenschicht mindestens eine Coextrusionsschicht aufweist.

12. Folienaufbau nach Anspruch 11, **dadurch gekennzeichnet, dass** die Coextrusionsschicht eine Dicke von 10 bis 100 µm aufweist.

13. Backlight Unit für einen Flüssigkristall-Bildschirm enthaltend einen Folienaufbau gemäß einem der Ansprüche 1 bis 12

14. Verwendung eines Folienaufbaus gemäß einem der Ansprüche 1 bis 12 in einem optischen Foliensatz für einen Flachbildschirm.

## Claims

1. Film structure comprising at least one prism film and/or a diffuser film, and also a multilayer optical film, said multilayer optical film having at least one outer film with an outer layer which faces the prism film and/or diffuser film and is composed of a polymer composition comprising a transparent thermoplastic and, as a lubricant additive, at least one quaternary ammonium salt of a perfluoroalkylsulphonic acid, **characterized in that** the outer layer has at least one coefficient of sliding friction of < 0.30 with respect to the prism film and/or diffuser film measured to ASTM standard D 1894-06, with a roughness R3z > 5 µm measured to ISO standard 4288.

2. Film structure according to Claim 1, **characterized in that** the prism film has a prism structure facing the multilayer optical film and the outer layer of the multilayer optical film has a coefficient of sliding friction of ≤ 0.25 parallel to the prism structure of the prism film and a coefficient of sliding friction of ≤ 0.30 at right angles to the prism structure of the prism film, in each case measured to ASTM standard D 1894-06, with a roughness R3z > 5 µm (R3z to ISO 4288).

3. Film structure according to Claim 1 or 2, **characterized in that** the multilayer optical film has an optical base film comprising a multilayer composed of naphthalenedicarboxylic acid and/or terephthalic acid polyester.

4. Film structure according to at least one of Claims 1 to 3, **characterized in that** the polymer composition of the outer layer comprises 96-99.89% by weight of a transparent thermoplastic and 0.001 to 4.0% by weight of quaternary ammonium salts of perfluoroalkylsulphonic acids as a lubricant additive, where these constituents in each case add up to 100% by weight.

5. Film structure according to at least one of Claims 1 to 4, **characterized in that**, for the polymer composition of the outer layer, a transparent thermoplastic selected from the group of the polyacrylates, polymethacrylates, cycloolefin copolymers, polysulphones, polystyrenes, poly-alpha-methylstyrenes, polyesters, polycarbonates, polycarbonate/polyester blends, polycarbonate/polycyclohexylmethanol cyclohexanedicarboxylate (PCCD) and polycarbonate/PBT is used.

6. Film structure according to at least one of Claims 1 to 5, **characterized in that** the lubricant additive used comprises one or more quaternary ammonium salts of a perfluoroalkylsulphonic acid of the formula (I)
R-SO₃NR'R"R"'R"" (I)
in which
R is perfluorinated cyclic or linear, branched or unbranched carbon chains having 1 to 30 carbon atoms;
R' is unsubstituted or halogen-, hydroxyl-, cycloalkyl- or alkyl-substituted, cyclic or linear, branched or unbranched carbon chains having 1 to 30 carbon atoms,
and
R", R"' and R"" are each independently unsubstituted or halogen-, hydroxyl-, cycloalkyl-or alkyl-substituted, cyclic or linear, branched or unbranched carbon chains having 1 to 30 carbon atoms.

7. Film structure according to at least one of Claims 1 to 6, **characterized in that** the lubricant additive is one or more quaternary ammonium salts selected from the group of
perfluorooctanesulphonic acid tetrapropylammonium salt,
perfluorobutanesulphonic acid tetrapropylammonium salt,
perfluorooctanesulphonic acid tetrabutylammonium salt,
perfluorobutanesulphonic acid tetrabutylammonium salt,
perfluorooctanesulphonic acid tetrapentylammonium salt,
perfluorobutanesulphonic acid tetrapentylammonium salt,
perfluorooctanesulphonic acid tetrahexylammonium salt,
perfluorobutanesulphonic acid tetrahexylammonium salt,
perfluorobutanesulphonic acid trimethylneopentylammonium salt,
perfluorooctanesulphonic acid dimethyldiisopropylammonium salt,
perfluorooctanesulphonic acid trimethylneopentylammonium salt,
perfluorobutanesulphonic acid dimethyldineopentylammonium salt,
perfluorooctanesulphonic acid dimethyldineopentylammonium salt,
N-methyltripropylammonium perfluorobutylsulphonate,
N-ethyltripropylammonium perfluorobutylsulphonate, tetrapropylammonium perfluorobutylsulphonate, dimethyldiisopropylammonium perfluorobutylsulphonate,
N-methyltributylammonium perfluorooctylsulphonate, cyclohexyldiethylmethylammonium perfluorooctylsulphonate and
cyclohexyltrimethylammonium perfluorooctylsulphonate.

8. Film structure according to at least one of Claims 1 to 7, **characterized in that** the lubricant additive is diisopropyldimethylammonium perfluorobutylsulphonate.

9. Film structure according to at least one of Claims 1 to 8, **characterized in that** the multilayer optical film has a thickness of 50 µm to 1000 µm.

10. Film structure according to at least one of Claims 1 to 9, **characterized in that** the outer layer of the multilayer optical film has a thickness of 1 µm to 150 µm.

11. Film structure according to at least one of Claims 1 to 10, **characterized in that** the outer film, as well as the outer layer, has at least one coextrusion layer.

12. Film structure according to Claim 11, **characterized in that** the coextrusion layer has a thickness of 10 to 100 µm.

13. Backlighting unit for a liquid-crystal visual display unit, comprising a film structure according to any of Claims 1 to 12.

14. Use of a film structure according to any of Claims 1 to 12 in a set of optical films for a flat visual display unit.

## Revendications

1. Structure de feuilles comprenant au moins une feuille prisme et/ou une feuille diffuseur, ainsi qu'une feuille optique multicouche, la feuille optique multicouche comportant au moins une feuille supérieure ayant une couche externe orientée vers la feuille prisme et/ou la feuille diffuseur en une composition de plastique qui contient un thermoplastique transparent et en tant qu'additif lubrifiant au moins un sel d'ammonium quaternaire d'un acide perfluoroalkylsulfonique, **caractérisée en ce que** la couche externe présente au moins un coefficient de frottement dynamique < 0,30 sur la feuille prisme et/ou la feuille diffuseur, mesuré selon la norme ASTM D 1894-06, à une rugosité R3z > 5 µm, mesurée selon la norme ISO 4288.

2. Structure de feuilles selon la revendication 1, **caractérisée en ce que** la feuille prisme comporte une structure de prisme orientée vers la feuille optique multicouche et la couche externe de la feuille optique multicouche présente un coefficient de frottement dynamique ≤ 0,25 parallèlement à la structure de prisme de la feuille prisme et un coefficient de frottement dynamique ≤ 0,30 perpendiculairement à la structure de prisme de la feuille prisme, à chaque fois mesurés selon la norme ASTM D 1894-06, à une rugosité R3z > 5 µm (R3z selon ISO 4288).

3. Structure de feuilles selon la revendication 1 ou 2, **caractérisée en ce que** la feuille optique multicouche comporte une feuille optique de base qui comprend une multicouche d'acide naphtaline-dicarboxylique et/ou de polyester de l'acide téréphtalique.

4. Structure de feuilles selon au moins l'une quelconque des revendications 1 à 3, **caractérisée en ce que** la composition de plastique de la couche externe contient 96 à 99,89 % en poids d'un thermoplastique transparent et 0,001 à 4,0 % en poids de sels d'ammonium quaternaires d'acides perfluoroalkylsulfoniques en tant qu'additif lubrifiant, la somme de ces constituants étant à chaque fois de 100 % en poids.

5. Structure de feuilles selon au moins l'une quelconque des revendications 1 à 4, **caractérisée en ce qu'**un thermoplastique transparent choisi dans le groupe des polyacrylates, polyméthacrylates, copolymères de cyclooléfines, polysulfones, polystyrènes, poly-alpha-méthylstyrènes, polyesters, polycarbonates, mélanges polycarbonate/polyester, polycarbonate/dicarboxylate de polycyclohexylméthanolcyclohexane (PCCD) et polycarbonate/PBT est utilisé pour la composition de plastique de la couche externe.

6. Structure de feuilles selon au moins l'une quelconque des revendications 1 à 5, **caractérisée en ce qu'**en tant qu'additif lubrifiant, un ou plusieurs sels d'ammonium quaternaires d'un acide perfluoroalkylsulfonique de formule (I)
R-SO₃ NR'R"R"'R"" (I)
sont utilisés, dans laquelle
R signifie des chaînes carbonées perfluorées cycliques ou linéaires, ramifiées ou non ramifiées, de 1 à 30 atomes de carbone ;
R' signifie des chaînes carbonées non substituées ou substituées par halogène, hydroxy, cycloalkyle ou alkyle, cycliques ou linéaires, ramifiées ou non ramifiées, de 1 à 30 atomes de carbone,
et
R", R"' et R"" signifient à chaque fois indépendamment les uns des autres des chaînes carbonées non substituées ou substituées par halogène, hydroxy, cycloalkyle ou alkyle, cycliques ou linéaires, ramifiées ou non ramifiées, de 1 à 30 atomes de carbone.

7. Structure de feuilles selon au moins l'une quelconque des revendications 1 à 6, **caractérisée en ce que** l'additif lubrifiant est un ou plusieurs sels d'ammonium quaternaires choisis dans le groupe
sel de tétrapropylammonium de l'acide perfluorooctane-sulfonique,
sel de tétrapropylammonium de l'acide perfluorobutane-sulfonique,
sel de tétrabutylammonium de l'acide perfluorooctane-sulfonique,
sel de tétrabutylammonium de l'acide perfluorobutane-sulfonique,
sel de tétrapentylammonium de l'acide perfluorooctane-sulfonique,
sel de tétrapentylammonium de l'acide perfluorobutane-sulfonique,
sel de tétrahexylammonium de l'acide perfluorooctane-sulfonique,
sel de tétrahexylammonium de l'acide perfluorobutane-sulfonique,
sel de triméthylnéopentylammonium de l'acide perfluorobutane-sulfonique,
sel de diméthyldiisopropylammonium de l'acide perfluorooctane-sulfonique,
sel de triméthylnéopentylammonium de l'acide perfluorooctane-sulfonique,
sel de diméthyldinéopentylammonium de l'acide perfluorobutane-sulfonique,
sel de diméthyldinéopentylammonium de l'acide perfluorooctane-sulfonique,
perfluorobutylsulfonate de N-méthyl-tripropylammonium, perfluorobutylsulfonate de N-éthyl-tripropylammonium, perfluorobutylsulfonate de tétrapropylammonium, perfluorobutylsulfonate de diméthyldiisopropylammonium, perfluorooctylsulfonate de N-méthyl-tributylammonium, perfluorooctylsulfonate de cyclohexyldiéthylméthylammonium et perfluorooctylsulfonate de cyclohexyltriméthylammonium.

8. Structure de feuilles selon au moins l'une quelconque des revendications 1 à 7, **caractérisée en ce que** l'additif lubrifiant est le perfluorobutylsulfonate de di-isopropyl-diméthylammonium.

9. Structure de feuilles selon au moins l'une quelconque des revendications 1 à 8, **caractérisée en ce que** la feuille optique multicouche présente une épaisseur de 50 µm à 1 000 µm.

10. Structure de feuilles selon au moins l'une quelconque des revendications 1 à 9, **caractérisée en ce que** la couche externe de la feuille optique multicouche présente une épaisseur de 1 µm à 150 µm.

11. Structure de feuilles selon au moins l'une quelconque des revendications 1 à 10, **caractérisée en ce que** la feuille supérieure comprend au moins une couche de coextrusion en plus de la couche externe.

12. Structure de feuilles selon la revendication 11, **caractérisée en ce que** la feuille de coextrusion présente une épaisseur de 10 à 100 µm.

13. Unité de rétroéclairage pour un écran à cristaux liquides contenant une structure de feuilles selon l'une quelconque des revendications 1 à 12.

14. Utilisation d'une structure de feuilles selon l'une quelconque des revendications 1 à 12 dans une composition optique de feuilles pour un écran plat.
